# EUROPEAN PATENT APPLICATION

(11) **EP 3 451 523 A1**
(43) Date of publication of application: **06.03.2019**
(21) Application number: 17188868.8
(22) Date of filing: 31.08.2017
(51) Int. Cl.: H02M 7/483, H01L 23/00

(54) **VOLTAGE SOURCE CONVERTERS**

(71) Applicant: General Electric Technology GmbH, 5400 Baden (CH)
(72) Inventor: ELLIOTT, Robert, Stafford, ST17 4LX (GB); HABEB, Rawaa Richard, Stafford, ST17 4LX (GB); SPINK, Matthew, Stafford, ST17 4LX (GB); BUTLER, Stephen David, Essington, Staffordshire WV11 2DP (GB)
(74) Representative: Fischer, Michael Maria

(57) **Abstract**

This application relates to voltage source converters (VSCs) for use in high voltage applications and, in particular, to the structure and assembly of a VSC. A valve assembly (301) for a VSC (300) has a plurality of series connected switching modules (201) arranged in a plurality of tiers, each tier being arranged at a different height. An upper set of the tiers are configured to form a first VSC valve (302) between a first AC terminal (101) and a first DC terminal (102, 103, 501) and a lower set of the tiers are configured to form a second VSC valve (303) between a second AC terminal (101) and a second DC terminal (102, 103, 501). The tiers are arranged so that first VSC valve overlies the second VSC valve. This provides a double valve assembly that provide two valves for VSC, but the footprint of a single conventional valve.

## Description

This application relates to voltage source converters for use in high voltage applications and, in particular, to the structure and assembly of voltage source converters.

High-voltage direct current (HVDC) electrical power transmission uses direct current for the transmission of electrical power. This is an alternative to alternating current electrical power transmission which is more common. There are a number of benefits to using HVDC electrical power.

In order to use HVDC electrical power transmission, it is typically necessary to convert alternating current (AC) electrical power to direct current (DC) and back again. Recent developments in the power electronics field have led to an increased use of voltage-source converters (VSCs) for AC-DC and DC-AC conversion. VSCs make use of switching elements, typically insulated gate bipolar transistors (IGBTs) connected with respective anti-parallel diodes, that can be controllably turned on and off.

Typically a VSC will comprise a phase limb for each electrical phase of the AC network. Each phase limb may be coupled to the DC network at respective high-side and low-side DC terminals, e.g. between high-side and low-side DC busbars, and will also be connected to the AC network via at least one AC node. A phase limb will comprise a plurality of converter arms, with each converter arm extending between an AC node and a defined nominal DC voltage. In a symmetric monopole arrangement a phase limb may have two converter arms, a high-side converter arm extending between the AC node and the high-side DC terminal and a low-side converter arm extending between the AC node and the low-side DC terminal. In other arrangements, for instance a bipole scheme, there may be more converter arms, for instance there may be two converter arms in series between the high-side DC terminal and a ground terminal to form a positive pole, with an AC node at the midpoint of the series connection. Likewise a negative pole is formed by a similar arrangement connected between the ground terminal and the low-side DC terminal. In each case, each converter arm includes a switching apparatus, referred to as a valve.

Various designs of VSC are known. In some types of VSC, such as the modular multilevel converter (MMC) or alternate arm converter (AAC) for example, the valve may be formed, at least partly, from a series connection of a plurality of cells, each cell having an energy storage element such as a capacitor that can be selectively connected in series between the terminals of the cell or bypassed. The series connection of such cells is sometimes referred to as a chain-link circuit or chain-link converter or simply a chain-link and the cells are often referred to as sub-modules with a plurality of cells forming a module. Such chain link circuits can be used for voltage wave-shaping and can allow conversion between AC and DC with relatively low distortion.

In order to be able to handle the high voltages required and to provide the required performance each valve may comprise a relatively large number of cells. For example for a symmetrical monopole MMC handling voltages of ±250kV, each valve may comprise of the order of 240 cells or sub-modules. With two valves per phase limb, this scheme requires six such valves for a typical three phase AC network.

The valves are typically housed in a specially designed structure known as a valve hall. Due to the high voltages handled by the valves, having the appropriate insulation and separation between valves and between the valves and the surrounding valve hall is extremely important. Valve hall designs have developed so there is a large clearance above and/or below the valves to provide the appropriate insulation safety measures.

For an MMC-type VSC having six valves the clearance required between the valves and the surrounding valve hall means that the dimensions of a valve hall can be very large. In some instances a large area or footprint for a valve hall may be disadvantageous, for instances in terms of cost, especially, for instance, if the valve hall is provided on an offshore platform that has to be sized appropriately.

Embodiments of the invention relate to apparatus and methods for assembling a VSC that at least mitigate some of the above mentioned problems.

Thus accordingly there is provided a valve assembly for voltage source converter (VSC) comprising: a plurality of series connected switching modules arranged in a plurality of tiers, each tier arranged at a different height; wherein an upper set of said tiers are configured to form a first VSC valve between a first AC terminal and a first DC terminal; and a lower set of said tiers are configured to form a second VSC valve between a second AC terminal and a second DC terminal, the first VSC valve at least partly overlying the second VSC valve.

The first AC terminal may be the same as the second AC terminal, i.e. there may be a common AC terminal for the first and second VSC valves. The common AC terminal may be located substantially at a midpoint of said plurality of tiers of switching modules.

In some instances the first DC terminal may be connected to a module of the uppermost tier of said plurality of tiers. The second DC terminal may be connected to a module of the lowermost tier of said plurality of tiers.

In some instance the valve assembly may be configured for use as a symmetric monopole VSC. In which case, in use, the first DC terminal may be held at a nominal voltage of one polarity and the second DC terminal may be held at a nominal voltage of opposite polarity.

Alternatively in some instance the valve assembly may configured for use as a symmetric bipole VSC. In such a case, in use, the first DC terminal may be held at a nominal voltage of one polarity and the second DC terminal may be held at ground potential. In such a case a clearance distance between the lowermost tier of the valve assembly and a floor of a valve hall may be lower than a clearance distance between the uppermost tier of the valve assembly and a ceiling of the valve hall. The valve assembly may provide a positive pole of the bipole VSC and may be electrically connected to a second valve assembly configured as a negative pole of the bipole VSC.

The valve assembly may be located in a valve hall. At least a portion of the valve assembly may be supported from a floor of the valve hall. Additionally or alternatively at least a portion of the valve assembly may be supported from a ceiling of the valve hall. In some instances a support platform may be located between a first upper subset of the plurality of tiers of switching modules and a second lower subset of the plurality of tiers of modules. The first upper subset of the plurality of tiers of switching modules may be supported from the support platform. The upper subset of the plurality of tiers of switching modules may comprise the upper set of said tiers that are configured to form the first VSC valve.

In some arrangement the valve assembly may comprise sub-sections which are supported independently of other sub-sections.

The modules may be connected in series to provide a helical current path through the valve assembly.

Each switching module may comprise a plurality of series connected sub-modules, each sub-module comprising an energy storage element and a switch arrangement operable to connect the energy storage element in series between terminals of the sub-module or connect the terminals of the sub-module in a path that bypasses the energy storage element.

Aspects also relate to method of assembling a voltage source converter. The method comprises: providing a plurality of series connected switching modules in a plurality of tiers, each tier arranged at a different height; connecting an upper set of said tiers to form a first VSC valve between a first AC terminal and a first DC terminal; and connecting a lower set of said tiers to form a second VSC valve between a second AC terminal and a second DC terminal, the first VSC valve at least partly overlying the second VSC valve.

The invention will now be described by way of example only, with reference to the accompanying drawings, of which:
Figure 1 illustrates the principles of a VSC in a symmetric monopole configuration;
Figures 2a and 2b illustrate positive and negative valve structures as may be used for the VSC illustrated in figure 1;
Figure 3 illustrates of the principles of a VSC incorporating a double valve assembly according to an embodiment;
Figure4 illustrates an embodiment of a double valve assembly;
Figure 5 illustrates how a double valve assembly could be implemented for a VSC in bipole configuration; and
Figures 6a to 6c illustrates various embodiments of how a double valve assembly could be supported in a valve hall.

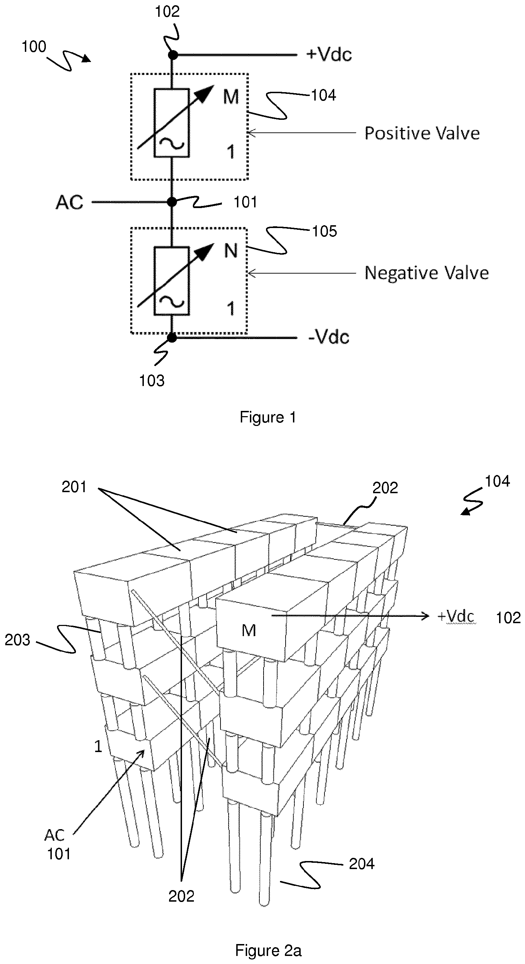

**Figure 1** illustrates the basic principle of one type of VSC 100. Figure 1 illustrates, in this example, a symmetrical monopole VSC arrangement, and may, for example, be an MMC type VSC. Figure 1 illustrates the VSC with just one phase limb for clarity but it would be understood that there may be multiple phase limbs in some implementations. The phase limb has an AC terminal 101 for connecting to an AC network between respective high-side and low-side DC terminals 102, 103 for connection to a DC network. In the illustrated example, the phase limb comprises two valves 104, 105, with a first valve 104 (which may be seen as the positive valve) being coupled between the AC terminal 101 and the high-side DC terminal 102, and a second valve 105 (which may be seen as the negative valve) being coupled between the AC terminal 1 01 and the low-side DC terminal 103.

For an MMC type VSC each valve will comprise a plurality of switching cells, each cell comprising an energy storage element such as a capacitor and controllable switching elements such as IGBTs that may be arranged so that the capacitor can be connected in series between the AC terminal 101 and relevant DC terminal 102, 103 or may be bypassed. By switching the capacitors of the cells in and out of series in a desired sequence the cells can synthesise a desired voltage waveform.

Typically each cell is housed in its own housing, with a number of cells being mounted adjacent one another on a rack to form what is commonly termed a module, with the individual cells being referred to as sub-modules. The valve will be constructed by arranging a number of modules in series in a valve hall. Thus figure 1 illustrates that the positive valve 104 may be formed by M modules connected in series, with the first module connected to the AC terminal 101 and the Mth module connected to high-side DC terminal 102. Likewise the negative valve 105 may comprise N modules (where typically N=M) with the first module connected to the low-side DC terminal 103 and the Nth module connected to the AC terminal 101.

As noted above to provide the required performance and to be able to handle the high voltages for HVDC power distribution, e.g. voltages of the order of hundreds of kilovolts, typically requires a relatively large number of submodules. As an example for a VSC 100 such as illustrated in figure 1, the high-side and low-side nominal voltages could be of the order of +250kV and - 250kV respectively. If a module comprises eight sub-modules there may be of the order of 30 modules.

The high voltages also mean that, for safe operation, the valve modules should be located in a secure valve hall and mounted via suitable insulating means and with suitable clearance from other structures of or within the valve hall to prevent unwanted electrical discharge. The valve modules clearly need to be connected in series, but it will be appreciated that in use different parts of the valve may be at significantly different voltages and thus modules forming the valve also need to be sufficiently isolated from other modules that may, in use, be at a significantly different voltage.

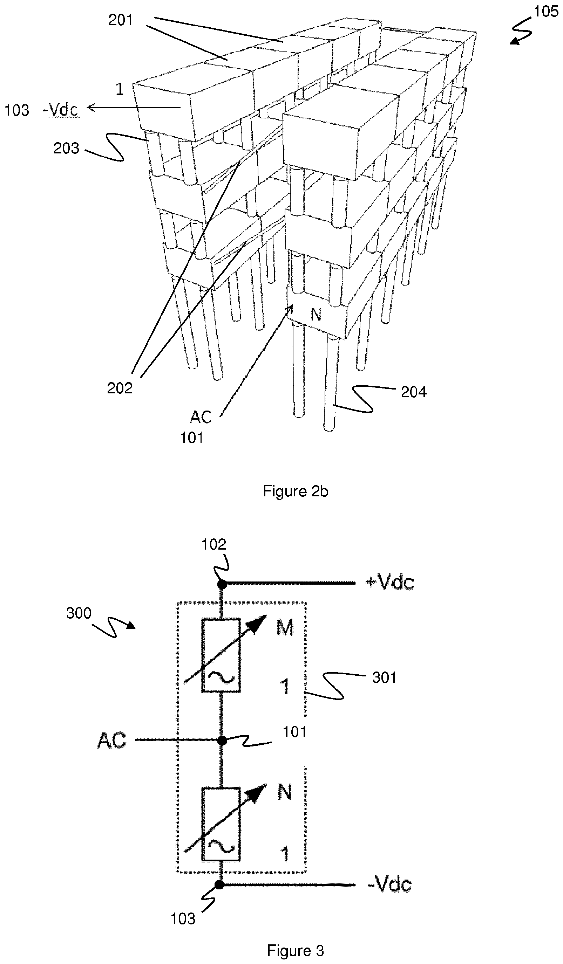

**Figures 2a** **and** **2b** illustrate an example of how the positive and negative valves may be assembled respectively. Figure 2a shows the structure of positive valve 104 and figure 2b the negative valve 105. In each case the valve structure comprises a plurality of switching modules 201.

In the example of figures 2a and 2b the modules are assembled in a number of separate tiers, each tier being supported at a different height, i.e. different distance from the floor of the valve hall, and with each tier comprising multiple rows of modules. In this example each tier has two rows of modules, with the rows being substantially parallel. The modules in a row are connected in series with one another and thus may be located adjacent to one another. Connections are made between modules at the end of the rows via suitable connections 202. In the example as illustrated the connection between two rows of the tier is made at the far end (as can be seen for the uppermost tier) and connections between tiers is made between the nearside modules of a first row of one tier connecting to the nearside module of the second row of the tier above.

The modules are thus effectively connected to one another to provide a current path that has helical-type arrangement. For the positive valve 104 illustrated in figure 2a, in the bottom tier the modules 1 to 5 are deployed in the left hand row (as illustrated) running from front to back, and modules 6 to 10 are deployed in the right hand row (as illustrated) running from back to front. In the middle tier modules 11 to 15 are deployed in the left hand row (as illustrated) running from front to back again and so on. For the negative valve the arrangement in each tier is the same, but the first module is deployed in the uppermost tier and the connection between tiers is to the tier below. This arrangement is convenient as effectively the deployment of modules in a valve is effectively the same for each valve.

It will be appreciated that this means there may, in use, be a relatively large voltage difference between the modules in the rows of a tier and between modules of the various tiers. The rows in a tier are thus spaced apart from one another by a suitable clearance and the tiers are supported separated from one another by inter-tier insulating supports 203. The exact separation required between the rows and tiers of modules will depend on the number of submodules/modules connected in series in one tier and the maximum voltage that can be reached by a single submodule.

For each of the positive valve 104 illustrated in figure 2a and the negative valve 105 illustrated in figure 2b the connection to the relevant high-side or low-side DC terminal 102 or 103 is made from the highest tier and the connection to the AC terminal 101 is made from the lowest tier. In use the relative DC terminal 102 or 103 will be expected to remain at a high DC voltage magnitude. The voltage of the AC terminal 101 may vary in use between a large positive voltage and large negative voltage. The lowest tier may therefore be supported to have a sufficient clearance from the floor of the valve hall.

In the illustrated example the valve includes insulating valve supports 204 that support the valve. The exact height of the valve supports 204 will again vary depending on the maximum voltage expected in use. It will be appreciated that valve supports 204 are mere examples of how a valve could be supported and the skilled person would recognise there are a number of support mechanisms that could be used. For example an alternative could comprising ceiling supports, which the valve is hung from.

For a VSC of an MMC or AAC type, typically three phases are required with thus a requirement for six valves. As discussed, this results in the need for a relatively large valve hall which can present a number of engineering challenges. A VSC design which decreases the footprint of the VSC, thus saving space and allowing a valve hall of smaller area would thus be advantageous.

Embodiments of the disclosure thus makes use of a double valve arrangement, with, in effect a first valve stacked on top of a second valve. In effect, referring back to figure 1, instead of separate valve structures 104 and 105 there is a single valve structure that provides the functionality of the two valves. Thus there a plurality of series connected switching modules arranged in a plurality of tiers, each tier arranged at a different height as discussed previously. In embodiments however an upper set of the tiers are configured to form a first VSC valve between a first AC terminal and a first DC terminal and a lower set of said tiers are configured to form a second VSC valve between a second AC terminal and a second DC terminal, where the first valve, at least partly overlies the second valve.

**Figure 3** illustrates a general concept of the invention. The line diagram illustrates an AC terminal 101 connected between two DC terminals, which may be high-side and low-side DC terminals 102 and 103 in a similar fashion to Figure 1. However, the embodiment in Figure 3 uses a double valve assembly 301 instead of two separate valves as illustrated in Figure 1. By using a tier of modules as a common building block for two valves, twice the number of valves can be accommodated within substantially the same footprint. The double valve assembly 301 provides equal quality in terms of waveform synthesising for converting AC-DC and converting DC-AC.

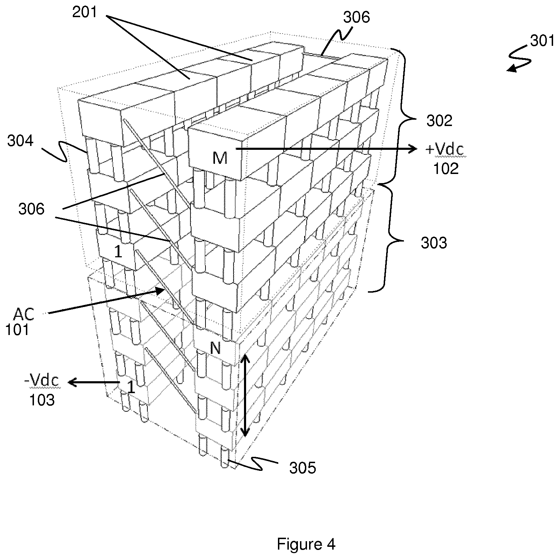

**Figure 4** illustrates an embodiment of the double valve assembly 301. The double valve assembly 301 is constructed by situating a number of modules providing the functionality of a first valve 302 on top of a set of modules forming a second valve 303. The modules forming the first valve are on top of the modules forming the second valve so that the first valve at least partly overlies the second valve, i.e. the area of the first valve at least partly overlaps with the area of the second valve when viewed from the vertical direction.

Advantageously the first valve substantially overlies the second valve. In the illustrated embodiment the first valve 302 can be seen as the positive valve and is stacked on top of negative valve 303. Like the example illustrated in figures 2a and 2b the valve assembly 301 comprises a number of modules 201 that contain a plurality of sub-modules connected in series. As with the individual valves illustrated in Figures 2a and 2b the modules 201 are arranged in rows forming a tier, in this example again with two rows for each tier. Multiple tiers form each single valve, with three tiers per valve for the illustrated example. This provides a double valve assembly comprising six tiers, with higher tiers overlying lower tiers. At least some tiers are separated from adjacent tiers by inter-tier insulators 304. Again, the exact separation between tiers provided by the inter-tier insulators 304, will vary depending on the number of modules/submodules connected in series in a tier and the maximum voltage that can be reached by a single submodule.

In the example of figure 4, which illustrates a double valve structure for a symmetrical monopole VSC, the uppermost tier may thus be connected to a first DC terminal, which may be one of the high-side or low-side DC terminals and the lowermost tier may be connected to second DC terminal, which may be the other of the low-side or high-side DC terminals. An AC terminal, which may serve as a common AC terminal for both valves, may be located at a midpoint of the tiers as illustrated - although in some embodiments separate AC terminals may be used. The double valve assembly is itself supported by insulating valve supports 305, which again may be stilt like supports extending from the floor of the valve hall, although other support arrangements may additionally or alternatively be used, such as ceiling supports or side wall supports as will be discussed in more detail later. The valve supports 305 should again be arranged to provide a sufficient clearance for the double valve assembly from the valve hall floor.

The modules 201 in each valve are connected in series with connections 306 connecting modules from row to row within a tier and from tier to tier.

In this example the positive valve 302 is arranged to provide a generally helical current path in a similar fashion as described previous with respect to figure 2a and thus the ordering of the modules is effectively the same as discussed above with respect to figure 2a. Thus the modules forming the positive part of the double valve assembly 301 may, for each tier, extend along one row (from front to back of the left side row as illustrated) and back in the opposite direction in the other row, with the higher tiers being the higher numbered modules, i.e. those closer to the high-side DC terminal. For the tiers forming the negative valve 303 of the double valve assembly however the ordering of the module is reversed compared to the arrangement illustrated in figure 2b. The ordering of the modules 1 to N of the negative part of the valve thus starts from the lowermost tier with the modules being ordered in the same way as for 1 to M modules of the positive part of the valve, but module 1 of the lowermost tier is coupled to the low-side DC terminal.

The positive valve 302 of the double valve assembly may thus be provided by modules connected in series, e.g. in a helical path, starting with module 1 and extending helically upwards to module M, in the same manners as the valve of figure 2a. The negative valve 303 of the double valve assembly may also be provided by modules connected in series in a helical path, which starts from the AC node 101 and extends helically downwards from module N to module 1. This is in contrast to the arrangement in the negative valve 105 illustrated in figure 2b which extends helically upwards from module N to module 1. Connecting the negative valve 303 of the double valve assembly in this way allows the AC terminal 101 for each valve to be connected at the midpoint of the double valve assembly and means that the voltage, in this example, increases from low-side DC voltage at the lowest tier to the high-side DC voltage at the uppermost tier. Connecting the AC terminals for the positive and negative valves at a similar point on the double valve assembly can provide a less complicated design and can save space. The helical growth in voltage through each valve also assists in saving space as it allows for a compact double valve assembly design.

The discussion above has focused on a symmetric monopole configuration. In such an arrangement the lowermost tier of the valve may be at the low-side or high-side DC voltage which will typically have a high magnitude. This may require a relatively large clearance between the lowermost tier and the valve hall floor for safety precautions. However in some VSC designs the double valve assembly may be achieved with a relatively low clearance.

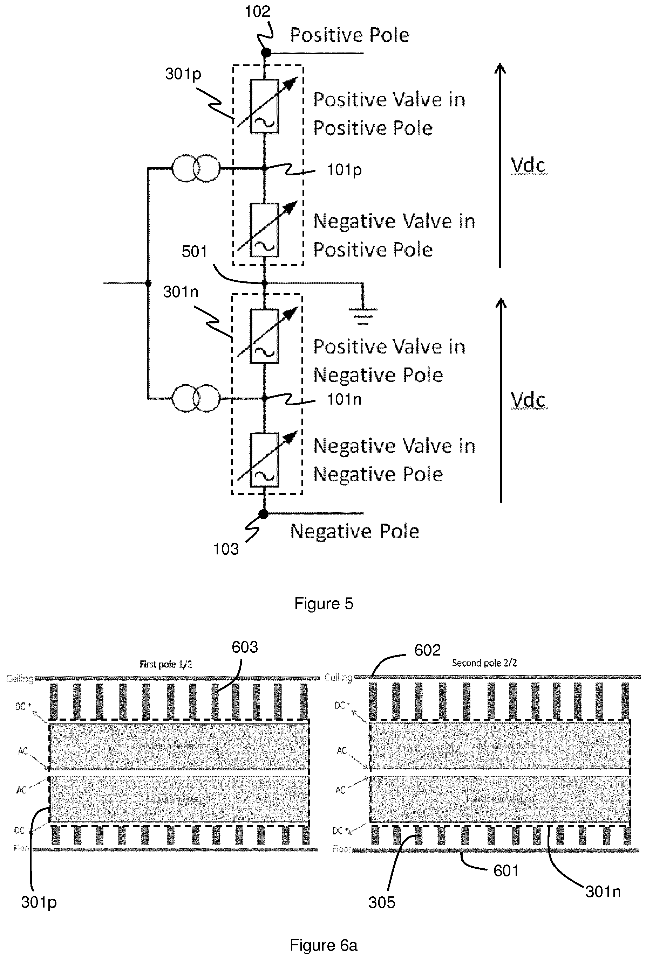

**Figure 5** illustrates a line diagram illustrating the principles of a VSC in a bipole configuration. Again figure 5 shows a single phase limb. As described previous the phase limb is connected between a high-side DC terminal 102 and low-side DC terminal 103. In this instance however there are two AC nodes 101p and 101n connecting to the AC network. The phase limb is divided into a positive pole, which is provided with two valves either side of the AC node 101p, and a negative pole with another two valves either side of AC node 101n. The midpoint between the positive pole and negative pole is coupled to an electrical ground node 501.

A VSC in bipole configuration can also utilise the space saving capability of the double valve assembly design by using one double valve assembly for each pole. Thus a first double valve assembly 301p could implement the two valves of the positive pole. Likewise a second double valve assembly 301n could implement the two valves of the negative pole.

In a bipole configuration, one end of one of the valves in each pole is at ground potential. Thus consider that the double valve assembly illustrated in figure 4 were used for one pole of the bipole VSC illustrated in figure 5, i.e. the positive double valve assembly 301p. In such a case the uppermost tier of the double valve assembly could be coupled to a first DC terminal, which may be the high-side DC terminal 102 as previously discussed. In this arrangement however the lowermost tier would thus be coupled to a second DC terminal, which is the electrical ground node. This may significantly reduce the clearance required between the floor of the valve hall and lowermost tier of the valve assembly.

Similarly the negative pole could be implemented with uppermost tier coupled to a first DC terminal, which in that case would be the low-side DC terminal and the lowermost tier coupled to a second DC terminal, i.e. the electrical ground terminal. For a bipole configuration the use of a double valve assembly as discussed can thus reduce the footprint required for the VSC as two valves can be provided in the same floor space as would previously have been occupied by a single valve. However any increased height of the valve hall may be relatively limited as, with single valves, the positive valve of the positive pole (or likewise the negative valve of the negative pole) would require a relatively large clearance from the floor of the valve hall. The lower clearance required for the double valve assembly thus means that the impact of additional tiers in the valve assembly is at least partly offset.

It will be appreciated that VSC valves are relatively large structures comprising many components. A single VSC comprises hundreds of submodules and the dimensions of a VSC are often over 10 metres. VSCs have been deployed in locations where seismic activity may be a serious problem to infrastructure. As such, ensuring valves are properly supported is required to ensure that the VSCs operate reliably.

VSCs using conventional single valves present a number of support challenges, however designs have developed to address many of these. Using double valve assemblies presents an even greater challenge in ensuring the double valve assembly is supported sufficiently. However there are a number of ways in which a double valve assembly may be arranged and supported.

**Figure 6a** illustrates schematically one example of how a VSC with a double valve assembly could be arranged within a valve hall. Figure 6a illustrates two double valve assemblies 301p and 301n of a bipole VSC such as discussed with respect to figure 5. In each case the lower section of the double valve arrangement is supported by floor mounted valve supports 305 extending from the valve hall floor 601 in a similar fashion as discussed above. As also noted above if the lowermost tier of each lower section includes the module connected to the ground terminal then the clearance required between the floor 601 and the double valve assembly may be relatively low. The top part of the double valve assembly 301p or 301n may be supported from the valve hall ceiling 602 by ceiling mounted valve supports 603. As the uppermost tier of the double valve assembly may be at a high magnitude voltage in use there may be a larger clearance required between the valve ceiling 602 and the double valve assembly 301p or 301n.

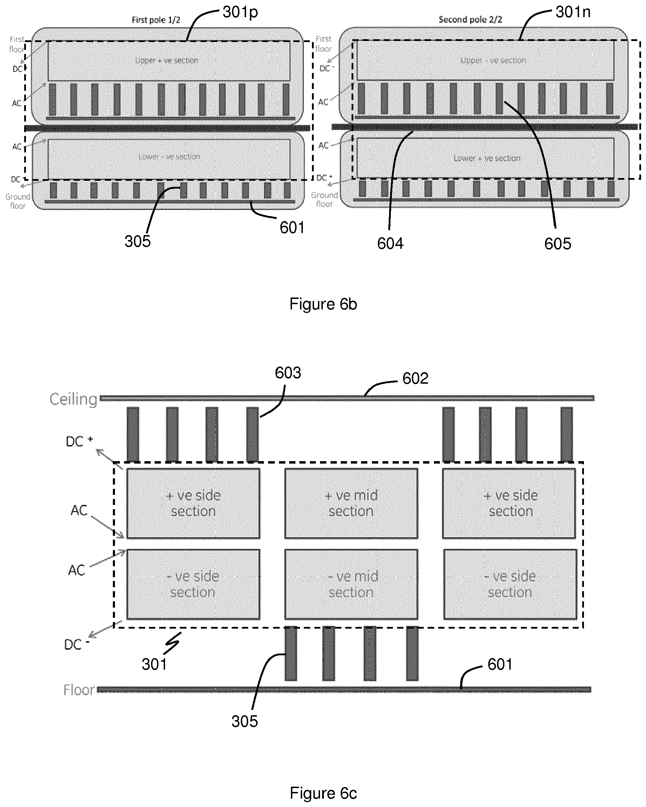

In some arrangements the upper part of the double valve assembly could be located above the lower part on a support platform 604, as illustrated by figure 6b. Figure 6b illustrates that the lower part of the double valve assemblies 301p and 301n may be supported from the floor 601 of the valve hall by supports 305 as discussed above. In this instance however a support platform 604 is arranged between the lower part and the upper part. The support platform 604 may extend beyond the area of the valve assembly and be supported by any suitable support structures. The support platform thus provides a solid base for the upper part of the double valve assembly which may be supported, with appropriate clearance, by supports 605. The support platform 604, in effect, provides an intermediate floor of the valve hall.

In some embodiments at least part of the double valve assembly may be supported from the valve hall floor and at least part may be supported from the valve hall ceiling. For example figure 6c illustrates an example where a double valve assembly 301 is divided into three different sections. At least one part of the double valve assembly is supported from the valve hall floor 601 and at least one part of the double valve assembly is supported from the valve hall ceiling 602 by supports 603. Supporting the double valve assembly in this way may provide the stability benefits of both floor and ceiling support but without requiring as much support as if the entire double valve assembly is supported from both the floor and ceiling.

All of the embodiments of VSCs utilizing a double valve assembly provide a VSC with a smaller footprint compared to VSCs using conventional valve assembly techniques. VSCs with a double valve assembly can present a valve footprint which is half the area as compared to those using conventional designs. As also disclosed, using a double valve assembly design in VSCs operating a bipole configuration can reduce the footprint of the valve hall without a corresponding increase in height.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality. Any reference signs in the claims shall not be construed so as to limit their scope.

## Claims

1. A valve assembly (301) for voltage source converter (VSC) comprising:
a plurality of series connected switching modules (201) arranged in a plurality of tiers, each tier arranged at a different height;
wherein an upper set of said tiers are configured to form a first VSC valve (302) between a first AC terminal (101) and a first DC terminal (102, 103, 501); and
a lower set of said tiers are configured to form a second VSC valve (303) between a second AC terminal (101) and a second DC terminal (102, 103, 501),
the first VSC valve overlying the second VSC valve.

2. A valve assembly as claimed in claim 1 wherein the first AC terminal is the same as the second AC terminal and is located substantially at a midpoint of said plurality of tiers of switching modules.

3. A valve assembly as claimed in claim 1 or claim 2 wherein the first DC terminal (102, 103, 501) is connected to a module of the uppermost tier of said plurality of tiers and the second DC terminal (102, 103, 501) is connected to a module of the lowermost tier of said plurality of tiers.

4. A valve assembly as claimed in any preceding claim wherein the valve assembly is configured for use as a symmetric monopole VSC wherein, in use, the first DC terminal (102, 103) is held at a nominal voltage of one polarity and the second DC terminal (103, 102) is held at a nominal voltage of opposite polarity.

5. A valve assembly as claimed in claim 3 wherein the valve assembly is configured for use as a symmetric bipole VSC wherein, in use, the first DC terminal (102, 103) is held at a nominal voltage of one polarity and the second DC terminal (501) is held at ground potential.

6. A valve assembly as claimed in claim 5 wherein a clearance distance between the lowermost tier of the valve assembly and a floor (601) of a valve hall is lower than a clearance distance between the uppermost tier of the valve assembly and a ceiling (602) of the valve hall.

7. A valve assembly as claimed in claim 5 or claim 6 wherein the valve assembly (310p) comprises a positive pole of the bipole VSC and is electrically connected to a second valve assembly (301n) configured as a negative pole of the bipole VSC.

8. A valve assembly as claimed in any preceding claim located in a valve hall wherein at least a portion of the valve assembly is supported from a floor (601) of the valve hall.

9. A valve assembly as claimed in any preceding claim located in a valve hall wherein at least a portion of the valve assembly is supported from a ceiling (602) of the valve hall.

10. A valve assembly as claimed in any preceding claim further comprising a support platform (604) located between a first upper subset of the plurality of tiers of switching modules and a second lower subset of the plurality of tiers of modules and wherein the first upper subset of the plurality of tiers of switching modules is supported from the support platform.

11. A valve assembly as claimed in claim 10 wherein the upper subset of the plurality of tiers of switching modules comprises the upper set of said tiers that are configured to form the first VSC valve.

12. A valve assembly as claimed in any preceding claim wherein the valve assembly comprises sub-sections which are supported independently of other sub-sections.

13. A valve assembly as claimed in any preceding claim wherein the modules are connected in series to provide a helical current path through the valve assembly.

14. A valve assembly as claimed in any preceding claim wherein each switching module comprises a plurality of series connected sub-modules, each sub-module comprising an energy storage element and a switch arrangement operable to connect the energy storage element in series between terminals of the sub-module or connect the terminals of the sub-module in a path that bypasses the energy storage element.

15. A method of assembling a voltage source converter comprising:
providing a plurality of series connected switching modules (201) in a plurality of tiers, each tier arranged at a different height;
connecting an upper set of said tiers to form a first VSC valve (302) between a first AC terminal (101) and a first DC terminal (102, 103, 501); and
connecting a lower set of said tiers to form a second VSC valve (303) between a second AC terminal (101) and a second DC terminal (102, 103, 501);
the first VSC valve overlying the second VSC valve.
